# EUROPÄISCHE PATENTSCHRIFT

(11) **EP 0 656 174 B1**
(45) Veröffentlichungstag und Bekanntmachung des Hinweises auf die Patenterteilung: **08.03.2000**
(21) Anmeldenummer: 94117129.0
(22) Anmeldetag: 29.10.1994
(51) Int. Cl.: A21B 3/04, A47J 27/16

(54) **Back- und Bratofen mit einem Garraum und einem Dampferzeuger für den Garraum**
Baking and roasting oven with a cooking chamber and a steam generator for the cooking chamber
Four de cuisson et rôtissoire avec chambre de cuisson et générateur de vapeur pour la chambre

(30) Priorität: 04.12.1993 DE 4341410
(43) Veröffentlichungstag der Anmeldung: 07.06.1995
(73) Patentinhaber: AEG Hausgeräte GmbH, 90429 Nürnberg (DE)
(72) Erfinder: Riller, Peter, Dipl.-Ing., D-90547 Stein (DE); Greiner, Peter; Dr.re.nat., D-90451 Nürnberg (DE)

(56) Entgegenhaltungen:
- EP-A- 0 244 538
- EP-A- 0 319 673
- EP-A- 0 567 813
- DE-A- 2 245 715
- GB-A- 2 207 514
- GB-A- 2 260 832
- US-A- 4 770 888
- DATABASE WPI Week 8649, Derwent Publications Ltd., London, GB; AN 80-42319 & JP-B-61 051 736 (MATSUSHITA ELEC IND KK)

## Beschreibung

Die Erfindung betrifft einen Back- und Bratofen und ein Verfahren zum Steuern eines Dampferzeugers zum Zuführen von Dampf in einen Garraum eines Back- und Bratofens.

Back- und Bratöfen mit einem Garraum und einem Dampferzeuger für den Garraum sind bekannt (DE-OS 37 03 540). Bei solcher Art ausgerüsteten Back- und Bratöfen wird in der Regel der erzeugte Dampf in verhältnismäßig großen Mengen über das im Garraum abgestellte Gargut geleitet. Hierbei können sich, je nach Aufbau und Betriebsweise des Back- oder Bratofens, Probleme mit hohem Kondensatanfall ergeben. Als Folge davon sind spezielle Abdichtungsmaßnahmen am Garraum erforderlich. Die Benutzerfreundlichkeit eines solchen Back- und Bratofens (Herdes) wird dadurch ebenfalls erheblich herabgesetzt. Außerdem besteht dabei grundsätzlich die Gefahr des vorzeitigen Ausfalls vor allem von elektrischen Bauteilen durch Feuchtigkeitsniederschlag. Auch die vom Dampferzeuger verbrauchte Wassermenge und der zur Dampferzeugung erforderliche Verbrauch an Primärenergie ist äußerst unbefriedigend.

Aus EP 0 567 813 A2 ist ein Back- und Bratofen bekannt mit einem elektrisch beheizten Garraum, einem Heißluftgebläse, einem beheizten Dampferzeuger für den Garraum, einem Programmwähler zum Einstellen eines Garprozesses, einer im Bereich des Garraums angeordneten Meßeinrichtung zum Erfassen der Garraum-Dampfkonzentration, die eine Kondensatfalle, in der überschüssiger Dampf aus dem Garraum kondensiert und wenigstens zwei im Bereich der Kondensatfalle angeordnete Temperatursensoren umfaßt, wobei die Temperatursensoren die Temperaturänderung aufgrund der bei der Kondensation freiwerdenden Verdampfungswärme in der Kondensatfalle fortlaufend messen und einer Regeleinrichtung zum Regeln der Dampfkonzentration im Garraum durch Auswerten der Signale der Temperatursensoren als Maß für die Luftfeuchtigkeit in dem Garraum und Steuern des Dampferzeugers in Abhängigkeit von den aktuellen Feuchtigkeitswerten und deren Vergleich mit voreingestellten Sollwerten. Der Kondensatfalle ist ein Körper mit Rippenstruktur als Kühlungseinheit zugeschaltet. Wie die Sollwerte für die Regelung der Dampfkonzentration im Garraum einzustellen sind, ist in der EP 0 567 813 A2 nicht offenbart.

Der Erfindung liegt die Aufgabe zugrunde, die Dampfkonzentration in einem Back- und Bratofen der eingangs genannten Art automatisch so abzustimmen, daß ein Minimum an Kondensatanfall sowie an Wasser und damit auch Energieverbrauch stattfindet unter gleichzeitiger Beibehaltung eines guten Garergebnisses.

Diese Aufgabe wird gemäß der Erfindung gelöst durch einen Back- und Bratofen mit den Merkmalen des Anspruchs 1 oder des Anspruchs 5 und durch ein Verfahren mit den Merkmalen des Anspruchs 12 oder des Anspruchs 13. Durch die vorgeschlagenen Maßnahmen wird bei einem Back- und Bratofen mit Dampferzeuger in vorteilhafter Weise eine trägheitslose Regelung der Dampfkonzentration im Garraum unterhalb der Sättigungskonzentration bei sparsamsten Wasserverbrauch erreicht.

Vorteilhafte weitere Ausgestaltungen des Gegenstandes der Erfindung sind in den abhängigen Ansprüchen angegeben.

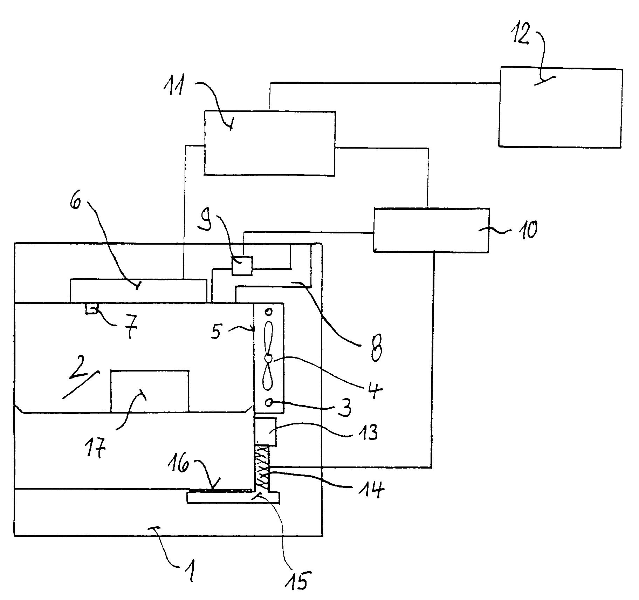

Ein Ausführungsbeispiel der Erfindung ist in der Zeichnung dargestellt und wird anhand dieser nachfolgend näher beschrieben.

Die Zeichnung zeigt in schematischer Prinzipdarstellung den Aufbau eines Back- und Bratofens mit einem Dampferzeuger und der zugehörigen Meß- und Regelungseinrichtung.

Der Back- und Bratofen 1 nach der Zeichnung hat einen von Wänden umschlossenen Garraum 2, dessen von vorne zugängliche Beschickungsöffnung durch eine nicht dargestellte Tür dicht verschließbar ist. An der Rückseite des Garraumes 2 ist ein mit einem elektrischen Ringheizkörper 2 versehenes Heißluftgebläse 4 angeordnet, das gegenüber dem Garraum durch eine mit Luftdurchtrittsöffnungen versehene Platte 5 abgedeckt ist. Vorzugsweise an der Außenseite der oberen Garraumwand (Garraumdecke) oder der Garraumrückwand ist ein Dampferzeuger 6 angebracht, der aus einem Wasserbehälter zur Aufnahme des zu verdampfenden Wassers, einen Wasserzerstäuber und einer Heizung besteht und einen in den Garraum 2 mündenden bzw. dorthin gerichteten Dampfauslaß 7 aufweist. Von der oberen Garraumwand geht ferner ein Wrasenabzugskanal 8 ab. Im Wrasenabzugskanal 8 ist eine als Feuchtigkeitssensor 9 ausgebildete Meßeinrichtung zur Erfassung der Garraum-Dampfkonzentration angeordnet. Der Feuchtigkeitssensor 9 kann eventuell auch an einer der Wände des Garraumes 2 angebracht werden. Als Feuchtigkeitssensor dient ein Keramik- oder ein Halbleitersensor, z.B. auf Mikrostrukturbasis, oder ein Sensor auf optischer Basis. Sollte in einer der oben angegebenen Sensoranordnungen die zulässige Betriebstemperatur des Sensors überschritten werden, ist dieser mit einer geeigneten Kühlungsvorrichtung zu versehen.

Der Feuchtigkeitssensor 9 ist Bestandteil einer elektronischen Meßwerte-Auswerteeinheit 10, durch die in Abhängigkeit der von dem Feuchtigkeitssensor 9 erfassten Meßwert-Signale für eine den Betrieb des Dampferzeugers 6 regelnden Einrichtung 11 (elektronische Regelungseinheit) abgeleitet werden. Die Regeleinrichtung 11 ist über einen Programmwähler 12 zum Anwählen des gewünschten Garablaufes bzw. Garprogrammes einstellbar. Die Auswerteeinheit beinhaltet z.B. eine Elektronik zur Kompensation des Temperaturgangs des Feuchtesensors anhand eines am Feuchtesensor angebrachten Temperaturfühlers und eine Verstärkerelektronik zur richtigen Signalpegeleinstellung.

Der Garraum 2 kann zweckmäßig mit einer Kondensatsammeleinrichtung ausgerüstet werden, durch die die überschüssige Feuchtigkeit aus diesem entfernt und aufgefangen wird. Eine solche Kondensatsammeleinrichtung besteht aus einer Kühlungseinheit 13, nachgeschalteter Kondensatfalle 14 mit Temperatursensor und sich daran anschließenden Kondensatauffangbehälter 15. Die Kühlungseinheit 13 ist ein Körper mit großer Oberfläche und kann als Sinterkörper, Körper mit Waben- oder Rippenstruktur, ausgebildet sein, der durch eine entsprechende Isolation vom Rest der Garraumwand abgekoppelt ist. Mittels geeigneter Kühlung wird dieser Körper auf einer Temperatur deutlich unter 100 °C gehalten. Der sich zum Teil unterhalb des Garraumbodens erstreckende Kondensatauffangbehälter 15 ist gegenüber dem Garraum durch eine thermische Isolierung 16 abgeschirmt. Mit der vorbeschriebenen Kondensatsammeleinrichtung wird der Dampf, der nicht vom Gargut 17 kondensiert oder Dampf, der vom Gargut ausgeht, abgezogen. Der der Kondensatsammeleinrichtung zugeordnete Temperatursensor ist ebenfalls Bestandteil der Meßwerte-Auswerteeinheit 10.

Mit der beschriebenen Einrichtung zur Dampferzeugung und der zugehörigen Meß- und Regeleinrichtung wird erreicht, daß die Dampfkonzentration im Garraum 2 stets unterhalb der Sättigungskonzentration auf den je nach Gargut und Fortschritt des Garprozesses minimal erforderlichen Wert eingeregelt und gehalten wird. Darunter ist zu verstehen, daß bei möglichst geringem Kondensatanfall sowie Energie- und Wasserverbrauch optimale Garergebnisse mit guter Speisenqualität erreicht werden. Die Einrichtung ist weiter so ausgelegt, daß eine schnelle und trägheitslose Regelung der Dampfzufuhr zum Garraum 2 gegeben ist. Vorzugsweise wird der Dampf durch Flüssigkeitszerstäubung und anschließender Erhitzung des Aerosols erzeugt. Dies geschieht in der Weise, daß im Dampferzeuger 6 das Wasser aus dessen Wasserbehälter mittels eines Zerstäubers, der aus einem Piezoelement, einer Druckdüsenanordnung oder einem Rotationsvernebler bestehen kann, zerstäubt und über die Heizung geleitet wird und dabei verdampft. Die Dampfmenge wird über die zerstäubte Wassermenge gesteuert.

Das Regelungsverfahren läuft in der Weise ab, daß durch den Feuchtigkeitssensor 9 die Feuchtigkeit im Garraum 2 oder die in den aus den Garraum über den Abzugskanal 8 abziehenden Wrasen enthaltene Feuchtigkeit gemessen wird. Aus den erfaßten Meßwerten werden dann in der Auswerteeinheit 10 Signale abgeleitet, die der Regeleinrichtung 11 zugeführt werden und die Regelgrößen für den Dampferzeuger des Garraums und damit für die Regelung der Dampferzeuger-Heizung und der Wassereinleitung in den Dampferzeuger darstellen. Die Dampferzeugung könnte auch in der Weise geregelt werden, daß die Temperaturänderung aufgrund der bei der Kondensation freiwerdenden Verdampfungswärme in der Kondensatfalle 14 laufend gemessen wird. Aus den erfaßten Meßwerten werden dann in der Auswerteeinheit 10 Signale abgeleitet, die Regelgrößen für den Dampferzeuger des Garraumes und damit für die Regelung der Dampferzeuger-Heizung und der Wassereinleitung in den Dampferzeuger darstellen. In Weiterbildung der Erfindung ist es vorteilhaft, sowohl den Feuchtigkeitsgehalt des Garraumdampfes als auch die Temperatur der bei der Kondensation des überschüssigen Garraumdampfes freiwerdenden Verdampfungswärme laufend zu messen und auszuwerten, wobei dann die aus diesen Meßwerten ermittelten Größen die Regelgrößen für die Regelung des Dampferzeugers des Garraumes sind.

Eine gleichmäßige Verteilung des Dampfes im Garraum 2 wird durch Zuschalten des Heißluftgebläses 4 erreicht. Die Dampfkonzentration im Garraum 2 kann, je nach Garprozeß, auf einen bestimmten Wert eingestellt bzw. vorgewählt werden (Programmwähler 12), oder anhand abgelegter Programme entsprechend dem Gargut und dem Fortschritt des Garprozesses variiert werden.

## Patentansprüche

1. Back- und Bratofen mit
a) einem elektrisch beheizten Garraum (2)
b) einem Heißluftgebläse (4),
c) einem beheizten Dampferzeuger (6) für den Garraum,
d) einem vom Garraum abgehenden Wrasenabzug (8),
e) einem Programmwähler (12) zum Einstellen eines Garablaufes oder Garprogrammes,
f) einer im Bereich des Garraumes angeordneten und als Feuchtigkeitssensor (9) ausgebildeten Meßeinrichtung zum Erfassen der Garraum-Dampfkonzentration,
g) einer Meßwerte-Auswerteeinheit (10) zum Ableiten von Regelgrößensignalen aus den Meßwerten der Meßeinrichtung (9) und
h) einer Regeleinrichtung (11) zum Regeln der Dampfkonzentration im Garraum auf einen Wert, der unterhalb der Sättigungskonzentration liegt und abhängig vom eingestellten Garablauf bzw. Garprogramm ist, durch Steuern des Dampferzeugers in Abhängigkeit von den Regelgrößensignalen der Meßwerte-Auswerteeinheit.

2. Back- und Bratofen nach Anspruch 1, bei dem der Feuchtigkeitssensor (9) im Wrasenabzug (8) des Garraumes (2) oder an einer von dessen Wandungen angeordnet ist.

3. Back- und Bratofen nach Anspruch 1 oder Anspruch 2, bei dem der Feuchtigkeitssensor mit einer Kühlungsvorrichtung versehen ist.

4. Back- und Bratofen nach einem der vorhergehenden Ansprüche, bei dem als Feuchtigkeitssensor (9) ein Keramik- oder Halbleitersensor, z.B. auf Mikrostrukturbasis, oder ein Sensor auf optischer Basis vorgesehen ist.

5. Back- und Bratofen mit
a) einem elektrisch beheizten Garraum (2)
b) einem Heißluftgebläse (4),
c) einem beheizten Dampferzeuger (6) für den Garraum,
d) einem vom Garraum abgehenden Wrasenabzug (8),
e) einem Programmwähler (12) zum Einstellen eines Garablaufes oder Garprogrammes,
f) einer im Bereich des Garraumes angeordneten Meßeinrichtung zum Erfassen der Garraum-Dampfkonzentration, die eine Kondensatfalle (14), in der überschüssiger Dampf aus dem Garraum (2) kondensiert, und einen im Bereich der Kondensatfalle (14) angeordneten Temperatursensor umfaßt, wobei der Temperatursensor die Temperaturänderung aufgrund der bei der Kondensation freiwerdenden Verdampfungswärme in der Kondensatfalle fortlaufend mißt,
g) einer Meßwerte-Auswerteeinheit (10) zum Ableiten von Regelgrößensignalen aus den Meßwerten des Temperatursensors,
h) einer Regeleinrichtung (11) zum Regeln der Dampfkonzentration im Garraum auf einen Wert, der unterhalb der Sättigungskonzentration liegt und abhängig vom eingestellten Garablauf bzw. Garprogramm ist, durch Steuern des Dampferzeugers in Abhängigkeit von den Regelgrößensignalen der Meßwerte-Auswerteeinheit.

6. Back- und Bratofen nach Anspruch 5 mit einer zusätzlichen im Bereich des Garraumes angeordneten und als Feuchtigkeitssensor (9) ausgebildeten Meßeinrichtung zum Erfassen der Garraum-Dampfkonzentration, wobei die Meßwerte-Auswerteeinheit (10) die Regelgrößensignale aus den Meßwerten sowohl des Feuchtigkeitssensors als auch des Temperatursensors ableitet.

7. Back- und Bratofen nach Anspruch 5 oder Anspruch 6, bei dem der Kondensatfalle (14) eine Kühlungseinheit (13) zu- bzw. vorgeschaltet ist, die durch eine thermische Isolation von der Garraumwand abgekoppelt bzw. getrennt ist.

8. Back- und Bratofen nach Anspruch 7, bei dem die Kühlungseinheit (13) ein Körper mit großer Oberfläche ist.

9. Back- und Bratofen nach Anspruch 7 oder 8, bei dem als Kühlungseinheit (13) ein Sinterkörper oder ein Körper mit Waben- oder Rippenstruktur dient.

10. Back- und Bratofen nach einem der vorhergehenden Ansprüche, bei dem der Dampferzeuger (6) aus einem Wasserbehälter sowie einem Wasserzerstäuber und einer elektrischen Heizung besteht und einen in den Garraum (2) mündenden bzw. dorthin gerichteten Dampfauslaß (7) aufweist.

11. Back- und Bratofen nach einem der vorhergehenden Ansprüche, bei dem der Dampferzeuger (6) der Garraumdeckenwand oder der Garraumrückwand zugeordnet ist.

12. Verfahren zum Steuern eines Dampferzeugers zum Zuführen von Dampf in einen Garraum eines Back- und Bratofens, der ein Heißluftgebläse (4), einen vom Garraum abgehenden Wrasenabzug (8), einen Programmwähler (12) zum Einstellen eines Garablaufes oder Garprogrammes, eine im Bereich des Garraumes angeordnete Meßeinrichtung (9) zum Erfassen der Garraum-Dampfkonzentration, eine Meßwerte-Auswerteeinheit (10) zum Ableiten von Regelgrößensignalen aus den Meßwerten der Meßeinrichtung und eine Regeleinrichtung (11) zum Regeln der Dampfkonzentration im Garraum umfaßt, wobei
a) als Meßeinrichtung ein Feuchtigkeitssensor (9) verwendet wird und mit dem Feuchtigkeitssensor (9) die Feuchtigkeit im Garraum (2) oder die in den aus dem Garraum abziehenden Wrasen enthaltene Feuchtigkeit gemessen wird,
b) aus den Meßwerten des Feuchtigkeitssensors (9) in der Meßwerte-Auswerteeinheit (10) Signale abgeleitet werden, die als Regelgrößen für die Regeleinrichtung (11) verwendet werden, und
c) die Regeleinrichtung (11) die Dampferzeuger-Heizung und die Wassereinleitung in den Dampferzeuger (6) derart steuert, daß die Dampfkonzentration im Garraum auf einen Wert unterhalb der Sättigungskonzentration geregelt wird, wobei dieser Wert abhängig vom Garablauf oder Garprogramm ist.

13. Verfahren zum Steuern eines Dampferzeugers zum Zuführen von Dampf in einen Garraum eines Back- und Bratofens, der ein Heißluftgebläse (4), einen vom Garraum abgehenden Wrasenabzug (8), einen Programmwähler (12) zum Einstellen eines Garablaufes oder Garprogrammes, eine im Bereich des Garraumes angeordnete Meßeinrichtung (9) zum Erfassen der Garraum-Dampfkonzentration, eine Meßwerte-Auswerteeinheit (10) zum Ableiten von Regelgrößensignalen aus den Meßwerten der Meßeinrichtung und eine Regeleinrichtung (11) zum Regeln der Dampfkonzentration im Garraum umfaßt, wobei
a) eine Meßeinrichtung mit einer Kondensatfalle (14), in der überschüssiger Dampf aus dem Garraum (2) kondensiert, sowie einem im Bereich der Kondensatfalle (14) angeordneten Temperatursensor verwendet wird und mit dem Temperatursensor die Temperaturänderung aufgrund der bei der Kondensation in der Kondensatfalle freiwerdenden Verdampfungswärme laufend gemessen wird,
b) aus den Meßwerten des Temperatursensors in der Meßwerte-Auswerteeinheit (10) Signale abgeleitet werden, die als Regelgrößen für die Regeleinrichtung (11) verwendet werden,
c) die Regeleinrichtung (11) die Dampferzeuger-Heizung und die Wassereinleitung in den Dampferzeuger (6) derart steuert, daß die Dampfkonzentration im Garraum auf einen Wert unterhalb der Sättigungskonzentration geregelt wird, wobei dieser Wert abhängig vom Garablauf oder Garprogramm ist.

14. Verfahren nach Anspruch 13, bei dem als zusätzliche Meßeinrichtung ein Feuchtigkeitssensor (9) verwendet wird und mit dem Feuchtigkeitssensor (9) die Feuchtigkeit im Garraum (2) oder die in den aus dem Garraum abziehenden Wrasen enthaltene Feuchtigkeit gemessen wird und bei dem als Regelgrößen für die Regeleinrichtung sowohl aus den Meßwerten des Feuchtigkeitssensors abgeleitete Signale als auch die aus den Meßwerten des Temperatursensors abgeleitete Signale der Meßwerte-Auswerteeinheit verwendet werden.

15. Verfahren nach einem der Ansprüche 12 bis 14, bei dem die Dampfkonzentration auf dem minimal erforderlichen Wert gehalten wird.

## Claims

1. Baking and roasting oven having
a) an electrically heated cooking chamber (2)
b) a hot-air fan (4)
c) a heated steam generator (6) for the cooking chamber,
d) a vapour discharge (8) leading from the cooking chamber,
e) a programme selector (12) for setting a cooking cycle or cooking programme,
f) a measuring device disposed in the region of the cooking chamber and formed as a moisture sensor (9) for detecting the cooking chamber steam concentration
g) a measured value evaluation unit (10) for deriving controlled variable signals from the measured values of the measuring device (9) and
h) a control device (11) for controlling the steam concentration in the cooking chamber to a value which lies below the saturation concentration and is dependent on the set cooking cycle or cooking programme, by controlling the steam generator as a function of the controlled variable signals of the measured value evaluating unit.

2. Baking and roasting oven according to claim 1, in which the moisture sensor (9) is disposed in the vapour discharge (8) of the cooking chamber (2) or on one of its walls.

3. Baking and roasting oven according to claim 1 or 2, in which the moisture sensor is provided with a cooling device.

4. Baking and roasting oven according to one of the preceding claims, in which as a moisture sensor (9) a ceramic or semi-conductor sensor, e.g. on a microstructure basis or a sensor on an optical basis is provided.

5. Baking and roasting oven having
a) an electrically heated cooking chamber (2)
b) a hot-air fan (4)
c) a heated steam generator (6) for the cooking chamber,
d) a vapour discharge (8) leading from the cooking chamber,
e) a programme selector (12) for setting a cooking cycle or cooking programme,
f) a measuring device disposed in the region of the cooking chamber for detecting the cooking chamber steam concentration, which comprises a condensate trap (14), in which excess steam from the cooking chamber (2) condenses, and a temperature sensor disposed in the region of the condensate trap (14), the temperature sensor measuring the temperature change continuously on the basis of the vaporising heat in the condensate trap released during condensation,
g) a measured value evaluating unit (10) for deriving controlled variable signals from the measured values of the temperature sensor,
h) a control device (11) for setting the steam concnetration in the cooking chamber to a value which lies below the saturation concentration and is dependent on the set cooking cycle or cooking programme, by controlling the steam generator as a function of the controlled variable signals of the measured value evaluating unit.

6. Baking and roasting oven according to claim 5, having an additional measuring device disposed in the region of the cooking chamber and formed as a moisture sensor (9) for detecting the cooking chamber steam concentration, wherein the measured value evaluation device (10) derives the controlled variable signals from the measured values both of the moisture sensor and of the temperature sensor.

7. Baking and roasting oven according to claim 5 or claim 6, in which a cooling device (13) is connected to or upstream of the condensate trap (14) and is separated by a thermal insulation from the cooking chamber wall.

8. Baking and roasting oven according to claim 7, in which the cooling unit (13) is a body with a large surface.

9. Baking and roasting oven according to claim 7 or 8, in which as a cooling unit (13) a sintered body or a body with a honeycomb or rib structure is used.

10. Baking and roasting oven according to one of the preceding claims, in which the steam generator (6) consists of a water container and a water atomiser and an electric heater and has a steam outlet (7) opening into the cooking chamber (2) or oriented towards the same.

11. Baking and roasting oven according to one of the preceding claims, in which the steam generator (6) is associated with the cooking chamber top wall or the cooking chamber rear wall.

12. Method of controlling a steam generator for supplying steam to a cooking chamber of a baking and roasting oven, which comprises a hot-air fan (4), a vapour discharge (8) leading from the cooking chamber, a programme selector (12) for setting a cooking cycle or cooking programme, a measuring device (9) disposed in the region of the cooking chamber for detecting the cooking chamber steam concentration, a measured value evaluating unit (10) for deriving controlled variable signals from the measured values of the measuring device and a control device (11) for controlling the steam concentration in the cooking chamber, wherein
a) as a measuring device a moisture sensor (9) is used and with the moisture sensor (9) the moisture in the cooking chamber (2) or the moisture contained in the vapours discharged from the cooking chamber is measured,
b) from the measured values of the moisture sensor (9) in the measured value evaluation unit (10) signals are derived which are used as controlled variables for the control device (11), and
c) the control device (11), the steam generator heater and the water supply line to the steam generator (6) are so controlled that the steam concentration in the cooking chamber is set to a value below the saturation concentration this value being dependent on the cooking cycle or cooking programme.

13. Method of controlling a steam generator for supplying steam to a cooking chamber of a baking and roasting oven, which comprises a hot-air fan (4), a vapour discharge (8) leading from the cooking chamber, a programme selector (12) for setting a cooking cycle or cooking programme, a measuring device (9) disposed in the region of the cooking chamber for detecting the cooking chamber steam concentration, a measured value evaluating unit (10) for deriving controlled variable signals from the measured values of the measuring device and a control device (11) for controlling the steam concentration in the cooking chamber, wherein
a) a measuring device with a condensate trap (14), in which excess steam from the cooking chamber (2) condenses, and a temperature sensor disposed in the region of the condensate trap (14) is used and with the temperature sensor the temperature change is measured continuously on the basis of the vaporising heat released during condensation in the condensate trap,
b) from the measured values of the temperature sensor in the measured value evaluating device (10) signals are derived which are used as controlled variables for the control device (11),
c) the regulating device (11), the steam generator heater and the water supply line to the steam generator (6) are so controlled that the steam concentration in the cooking chamber is set to a value below the saturation concentration, this value being dependent on the cooking cycle or cooking programme.

14. Method according to claim 13, in which as an additional measuring device a moisture sensor (9) is used and with the moisture sensor (9) the moisture in the cooking chamber (2) or the moisture contained in the vapours discharged from the cooking chamber is measured, and in which as controlled variables for the control device both signals derived from the measured values of the moisture sensor and the signals of the measured value evaluating unit derived from the measured values of the temperature sensor are used.

15. Method according to one of claims 12 to 14, in which the steam concentration is kept to the minimum necessary value.

## Revendications

1. Four à cuire et à rôtir comprenant
a) une enceinte de cuisson (2) chauffée électriquement,
b) une soufflerie d'air chaud (4),
c) un générateur de vapeur chauffé (6) pour l'enceinte de cuisson,
d) un ventilateur (8) partant de l'enceinte de cuisson,
e) un sélecteur de programme (12) pour le réglage d'un déroulement de cuisson ou d'un programme de cuisson,
f) un dispositif de mesure disposé au voisinage de l'enceinte de cuisson et réalisé comme capteur d'humidité (9) pour détecter la concentration de la vapeur dans l'enceinte de cuisson,
g) une unité d'évaluation (10) des valeurs de mesure pour dériver des signaux de grandeur de réglage à partir des valeurs de mesure du dispositif de mesure (9) et
h) un dispositif de réglage (11) pour régler la concentration de la vapeur dans l'enceinte de cuisson à une valeur inférieure à la concentration de saturation et qui dépend du déroulement respectivement programme de cuisson réglé, par la commande du générateur de vapeur en fonction des signaux de grandeur de réglage de l'unité d'évaluation des valeurs de mesure.

2. Four à cuire et à rôtir selon la revendication 1, où le capteur d'humidité (9) est disposé dans le ventilateur (8) de l'enceinte de cuisson (2) ou à l'une des parois de celle-ci.

3. Four à cuire et à rôtir selon la revendication 1 ou la revendication 2, où le capteur d'humidité est équipé d'un dispositif de refroidissement.

4. Four à cuire et à rôtir selon l'une des revendications précédentes, où est prévu comme capteur d'humidité (9) un capteur céramique ou semi-conducteur, par exemple à base de microstructure, ou un capteur à base optique.

5. Four à cuire et à rôtir comprenant
a) une enceinte de cuisson (2) chauffée électriquement,
b) une soufflerie d'air chaud (4),
c) un générateur de vapeur chauffé (6) pour l'enceinte de cuisson,
d) un ventilateur (8) partant de l'enceinte de cuisson,
e) un sélecteur de programme (12) pour régler un déroulement ou programme de cuisson,
f) un dispositif de mesure disposé au voisinage de l'enceinte de cuisson pour détecter la concentration de la vapeur dans l'enceinte de cuisson, qui comprend une trappe de condensat (14) dans laquelle est condensée la vapeur excédentaire de l'enceinte de cuisson (2) et un capteur de température disposé au voisinage de la trappe de condensat (14), où le capteur de température mesure continuellement la modification de la température sur la base de la chaleur d'évaporation se dégageant lors de la condensation dans la trappe de condensat,
g) une unité d'évaluation (10) des valeurs de mesure pour dériver des signaux de grandeur de réglage des valeurs de mesure du capteur de température,
h) un dispositif de réglage (11) pour régler la concentration de la vapeur dans l'enceinte de cuisson à une valeur inférieure à la concentration de saturation et qui dépend du déroulement respectivement programme de cuisson réglé, par la commande du générateur de vapeur en fonction des signaux de grandeur de réglage de l'unité d'évaluation des valeurs de mesure.

6. Four à cuire et à rôtir selon la revendication 5, avec un dispositif de mesure additionnel, disposé au voisinage de l'enceinte de cuisson et réalisé comme capteur d'humidité (9) pour détecter la concentration de la vapeur dans l'enceinte de cuisson, où l'unité d'évaluation (10) des valeurs de mesure dérive les signaux de grandeur de réglage à partir des valeurs de mesure à la fois du capteur d'humidité et du capteur de température.

7. Four à cuire et à rôtir selon la revendication 5 ou la revendication 6, dans lequel est connecté à respectivement disposé en amont de la trappe de condensat (14) un dispositif de refroidissement (13) qui est déconnecté respectivement séparé de la paroi de l'enceinte de cuisson par une isolation thermique.

8. Four à cuire et à rôtir selon la revendication 7, dans lequel l'unité de refroidissement (13) est un corps d'une grande surface.

9. Four à cuire et à rôtir selon la revendication 7 ou 8, dans lequel un corps fritté ou un corps d'une structure alvéolaire ou nervurée sert d'unité de refroidissement (13).

10. Four à cuire et à rôtir selon l'une des revendications précédentes, où le générateur de vapeur (6) est constitué d'un réservoir d'eau ainsi que d'un pulvérisateur d'eau et d'un chauffage électrique et présente une sortie de vapeur (7) débouchant dans l'enceinte de cuisson (2) respectivement orientée vers celle-ci.

11. Four à cuire et à rôtir selon l'une des revendications précédentes, dans lequel le générateur de vapeur (6) est associé au plafond de l'enceinte de cuisson ou à la paroi arrière de l'enceinte de cuisson.

12. Procédé de commande d'un générateur de vapeur pour l'amenée de la vapeur dans une enceinte de cuisson d'un four à cuire et à rôtir, qui comprend une soufflerie d'air chaud (4), un ventilateur (8) partant de l'enceinte de cuisson, un sélecteur de programme (12) pour régler un déroulement ou programme de cuisson, un dispositif de mesure (9) disposé au voisinage de l'enceinte de cuisson pour détecter la concentration de la vapeur dans l'enceinte de cuisson, une unité d'évaluation (10) des valeurs de mesure pour dériver des signaux de grandeur de réglage à partir des valeurs de mesure du dispositif de mesure et un dispositif de réglage (11) pour régler la concentration de la vapeur dans l'enceinte de cuisson où
a) est utilisé comme dispositif de mesure un capteur d'humidité (9) et est mesuré avec le capteur d'humidité (9) l'humidité dans l'enceinte de cuisson (2) ou l'humidité contenue dans les vapeurs à évacuer de l'enceinte de cuisson,
b) sont déduits des valeurs de mesure du capteur d'humidité (9) dans l'unité d'évaluation (10) des valeurs de mesure des signaux qui sont utilisés comme grandeurs de réglage pour le dispositif de réglage (11) et
c) le dispositif de réglage (11) commande le chauffage du générateur de vapeur et l'amenée d'eau dans le générateur de vapeur de façon que la concentration de la vapeur dans l'enceinte de cuisson est réglée à une valeur en dessous de la concentration de saturation, cette valeur étant dépendante du déroulement ou programme de cuisson.

13. Procédé de commande d'un générateur de vapeur pour introduire de la vapeur dans une enceinte de cuisson d'un four à cuire et à rôtir, qui comprend une soufflerie d'air chaud (4), un ventilateur (8) partant de l'enceinte de cuisson, un sélecteur de programme (12) pour régler un déroulement ou programme de cuisson, un dispositif de mesure (9) disposé au voisinage de l'enceinte de cuisson pour détecter la concentration de la vapeur dans l'enceinte de cuisson, une unité d'évaluation (10) des valeurs de mesure pour dériver des signaux de grandeur de réglage à partir des valeurs de mesure du dispositif de mesure et un dispositif de réglage (11) pour régler la concentration de la vapeur dans l'enceinte de cuisson, où
a) est utilisé un dispositif de mesure avec une trappe de condensat (14) dans laquelle est condensée la vapeur excédentaire de l'enceinte de cuisson (2), ainsi qu'un capteur de température disposé au voisinage de la trappe de condensat (14) et où est mesuré continuellement avec le capteur de température la modification de la température sur la base de la chaleur d'évaporation se dégageant lors de la condensation dans la trappe de condensat,
b) sont dérivés à partir des valeurs de mesure du capteur de température dans l'unité d'évaluation (10) des valeurs de mesure des signaux qui sont utilisés comme grandeurs de réglage pour le dispositif de réglage (11),
c) le dispositif de réglage (11) commande le chauffage du générateur de vapeur et l'amenée d'eau dans le générateur de vapeur (6) de façon que la concentration de la vapeur dans l'enceinte de cuisson soit réglée à une valeur inférieure à la concentration de saturation, cette valeur étant dépendante du déroulement ou programme de cuisson.

14. Procédé selon la revendication 13, où est utilisé comme dispositif de mesure additionnel un capteur d'humidité (9) et est mesuré avec le capteur d'humidité (9) l'humidité dans l'enceinte de cuisson (2) ou l'humidité contenue dans les vapeurs à évacuer de l'enceinte de cuisson et où sont utilisés comme grandeurs de réglage pour le dispositif de réglage des signaux dérivés à la fois des valeurs de mesure du capteur d'humidité et des signaux dérivés des valeurs de mesure du capteur de température de l'unité d'évaluation des valeurs de mesure.

15. Procédé selon l'une des revendications 12 à 14, où la concentration de la vapeur est maintenue à la valeur minimale requise.
